Europäisches Patentamt

European Patent Office

Office européen des brevets

(19)

(11) Publication number: 0 144 500
A2

(12) **EUROPEAN PATENT APPLICATION**

(21) Application number: 84106892.7

(22) Date of filing: 15.06.84

(51) Int. Cl.⁴: **A 01 K 13/00**

(30) Priority: 12.12.83 JP 191232/83 U

(43) Date of publication of application:
19.06.85 Bulletin 85/25

(84) Designated Contracting States:
DE FR GB IT

(71) Applicant: Ishihara, Masamitsu
628 Hirai Kannami-cho
Tagata-gun Shizuoka-ken(JP)

(72) Inventor: Ishihara, Masamitsu
628 Hirai Kannami-cho
Tagata-gun Shizuoka-ken(JP)

(74) Representative: Ruschke, Hans Edvard et al,
Patentanwälte Dipl.-Ing. Olaf Ruschke Dipl.-Ing. Hans E.
Ruschke Dipl,-Ing. Jürgen Rost Dipl.-Chem. Dr. U. Rotter
Pienzenauerstrasse 2
D-8000 München 80(DE)

(54) **Pet Washer.**

(57) The pet washer comprises a transparent box (1) which is divided into upper and lower parts (2), (3), with semicircular openings (5) in the center of the front ends of both upper and lower parts so that when the box is closed the pet's head remains outside the box (1), a spray nozzle (6) or tubular spray (6A) which is attached to the upper inner surface of the upper part of the box (2), a water-draining latticed board (9) extending over the bottom surface of the lower part of the box (3) from the front to the rear, and a drain port (10) which is located at the rear end of the lower part of the box (3).

F I G. 2

EP 0 144 500 A2

- 1 -

## Pet washer

This invention relates to a device used to wash the body of a pet such as a dog or cat.

This invention is intended to provide a pet washer with a simple arrangement.  To attain this object, the invention comprises:

a transparent box which is divided into an upper and lower part which is hinged on one side and whose upper and lower parts are both provided with a semicircular opening in the center of the front end in order to form an aperture for the pet's head;

a water spray nozzle attached to the upper inner surface of the upper part of the box;

a latticed draining board extending from the front to the rear end of the pet washer in the lower part of the box; and

a draining section at the rear end of the lower part of the box.

This invention can be more fully understood from the following detailed description when taken in conjunction with the accompanying drawings, in which:

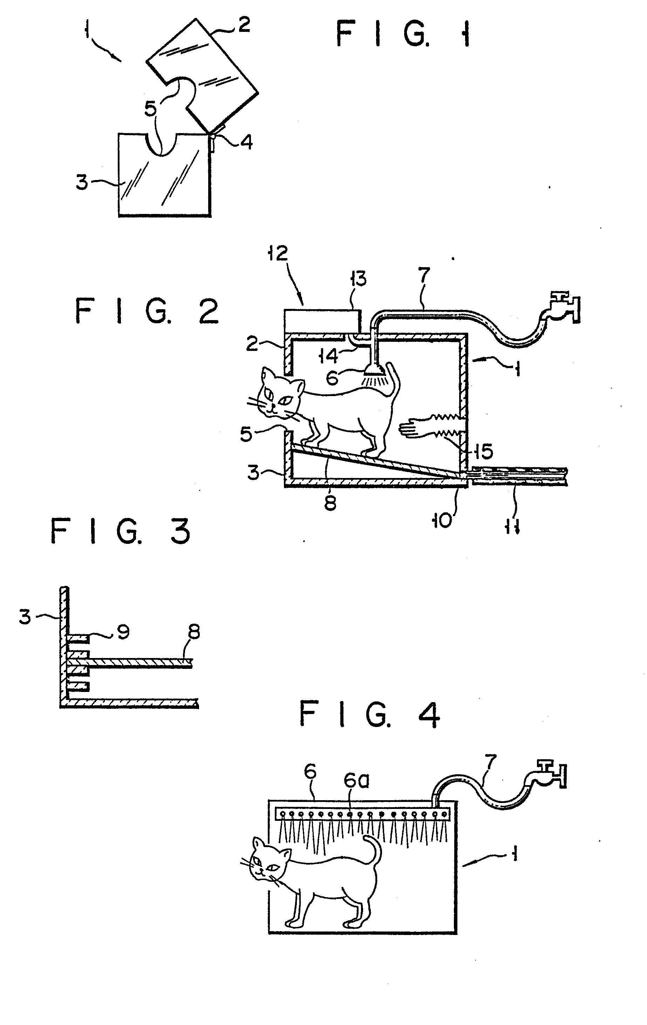

Fig. 1 is a front view of the upper and lower parts of a transparent box when open;

Fig. 2 is a longitudinal, partly sectional view of a device according to the invention in operation;

Fig. 3 is a longitudinal view of a latticed draining board inserted between the adjacent crosspieces; and

Fig. 4 illustrates the device with a different water spray nozzle.

A description may now be made with reference to the accompanying drawings of a pet washer as embodied by this invention. Reference number 1 denotes a transparent box made of, for example, acrylic resin. The box 1 is divided into an upper part 2 and a lower part 3. Both box parts 2, 3 are hinged on one side. The front ends of said box parts 2, 3 are provided with a large semicircular opening 5 in the center, said openings closing around the neck of the pet so that its head remains outside the pet washer during use. A circular spray nozzle 6, or a tubular spray 6A, is attached to the upper inner surface of the upper part of the box 2 and connected to a water hose 7. Said spray nozzle 6 or tubular spray 6A is also connected to a shampoo feeder 12. This shampoo feeder 12 consists of a tank 13 and a pipe 14 which supplies shampoo to the spray nozzle 6. The shampoo pipe 14 is fitted with a valve (not shown) in order to regulate the shampoo supply. A water-draining latticed board 8 is provided above the bottom of the lower part of the box 3. A number of crosspieces 9 are mounted on the inner surface of the front end of the lower part of the box 3 to support said water-draining latticed board 8. Said latticed board 8 can be changed in position by being inserted between different adjacent crosspieces 9. A drain port 10 is located at the end of the rear end of the bottom of the lower part of the box 3. A hose 11 is connected to the drain port 10 to draw off water. One or two compressible watertight gloves 15 are fitted to the rear wall of the lower part of box 3 so as to project inside the transparent box 1.

When the subject pet washer is put into operation, the height of the water-draining latticed board 8 can be so regulated as to cause the pet's neck to be properly set between the aforementioned openings 5. The upper transparent box 1 is opened so that the pet may be placed inside and closed ih such a manner that the pet's head protrudes from the openings 5. Thereafter, water and shampoo if required, are ejected from the nozzle 6 to wash the pet, and the operators hand(s) can be inserted into the watertight glove(s) 15. The box 1 prevents water from being splashed out while the pet is being washed and since it is transparent the operator can observe the pet. The water-tight glove(s) 15 prevent the operator's hand(s) from becoming soiled. The water used for washing the pet may be mixed in any ratio with shampoo supplied from the tank 13. Dirty water is discharged through the drain port 10 and hose 11. It is possible to provide a drain pump in the intermediate part of the hose 11 in order to carray the drained water to a suitable place for disposal.

The above-mentioned pet washer embodying this invention has the advantages that said washer is of a simple arrangement, may be used anywhere without water being splashed out, the operator's hands are not soiled and the pet may be observed while it is being washed.

Claims:

1. A pet washer characterized in that said washer comprises:

a transparent box (1) which is divided into upper and lower parts (2), (3), hinged together on one side;

semicircular openings in the center of the front ends of the said upper and lower parts of the box (2), (3), which, when the box is closed, allow the pet's head to remain outside;

a spray nozzle (6) or tubular spray (6A) provided on the upper inner surface said upper parts of the box (2);

a water-draining latticed board (8) extending over the bottm surface of the lower box from the front to the rear end, and

a drain port (10) which is located at the rear end of the lower box (3).

2. The pet washer according to claim 1, which is characterized in that the water-draining latticed board (8) is adjustable for height.

3. The pet washer according to claim 1 or 2, which is characterized in that the spray nozzle (6) or tubular spray (6A) is connected to a shampoo feeder (12).

4. The pet washer according to any one of claims 1 through 3, which is characterized in that one or two compressible watertight gloves (15) are fitted to the rear wall of the lower part of the transparent box (1) so as to project inside the box.

F I G. 1

F I G. 2

F I G. 3

F I G. 4